Europäisches Patentamt

European Patent Office

Office européen des brevets

(19)

(11) Veröffentlichungsnummer: **0 372 216**
**A1**

(12) # EUROPÄISCHE PATENTANMELDUNG

(21) Anmeldenummer: **89120122.0**

(22) Anmeldetag: **30.10.89**

(51) Int. Cl.⁵: **B65G 53/30**

Ein Antrag gemäss Regel 88 EPÜ auf Berichtigung der Beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: **02.12.88 HU 615288**

(43) Veröffentlichungstag der Anmeldung:
**13.06.90 Patentblatt 90/24**

(84) Benannte Vertragsstaaten:
**AT BE CH DE ES FR GB GR IT LI LU NL SE**

(71) Anmelder: **ENERGIAGAZDALKODASI INTEZET**
**33-34, Bem-rakpart**
**H-1027 Budapest II(HU)**

(72) Erfinder: **Falusi, Tamás**
**Garas u. 26/a**
**H-1026 Budapest(HU)**
Erfinder: **Dobozi, György**
**Ördögorom lejtó 12/b**
**H-1112 Budapest(HU)**
Erfinder: **Ignágcz, Csaba**
**Bethlen u. 14**
**H-2011 Budakalász(HU)**
Erfinder: **Pongràcz, Dániel**
**Felsózöldmáli u. 88/b**
**H-1025 Budapest(HU)**
Erfinder: **Iring, Rezsó**
**Kresz Géza u. 36**
**H-1132 Budapest(HU)**
Erfinder: **Bòdi, Béla**
**Rákoczi u. 2**
**H-3200 Gyöngyös(HU)**
Erfinder: **Rèsch, Pál**
**Ménesi u. 28**
**H-1222 Budapest(HU)**
Erfinder: **Kallo, György**
**Napsugár sétány 2**
**H-2040 Budaörs(HU)**
Erfinder: **Szivak, Attila**
**Rózse u. 6-8**
**H-1125 Budapest(HU)**

(74) Vertreter: **Patentanwälte Viering & Jentschura**
**Steinsdorfstrasse 6**
**D-8000 München 22(DE)**

(54) **Hydraulische Förderanlage mit Strömungswechselwerken.**

(57) Die Erfindung betrifft eine hydraulische Förderanlage mit Strömungswechselwerken (31, 32) zum Umstellen von Drücken und Strömungen, die in drei voneinander abtrennbaren, mit flüssigem Medium aufgefüllten, unter Druck stehenden Kammern (A, B, C) erzeugt werden, wobei in der Anlage eine mit ihrer Saugseite an einen Gemischsammelbehälter (21) angeschlossene Trübefüllpumpe (22) über eine Druckleitung (23), die drei Dosierkammern (A, B, C) und eine Abflußleitung (25) mit einem Flüssigkeitsspeicherbecken (26) verbunden ist, desweiteren eine mit ihrer Saugseite an das Flüssigkeitsspeicherbecken (26) angeschlossene entleerende-fördernde Flüssigkeitspumpe (20) über eine Druckleitung (27) und die drei Kammern (A, B, C) mit einer Gemischförderleitung (28) verbunden ist. Die Erfindung besteht darin, daß zur Verbindung der Auffülldruckleitung (23) und der Abflußleitung (25) über die Dosierkammern (A, B, C) ein kombiniertes Strömungswechselwerk (31) vorgesehen ist, desweiteren zur Verbindung der Druckleitung (27) der Flüssigkeitspumpe und der Gemischförderleitung (28) über die Dosierkammern (A, B, C) gleicherweise ein kombiniertes Strömungswechselwerk (32) eingebaut ist, die beiden kombinierten Strömungswechselwerke (31, 32) einander gegenüber angeordnet sind, wobei die Mittellinien übereinstimmend sind und die polygonalen Gehäuse (1) der kombinierten Strömungswechselwerke (31, 32) aus je zwei Profilen (A-A, B-B) bestehen.

Fig.4

## HYDRAULISCHE FÖRDERANLAGE MIT STRÖMUNGSWECHSELWERKEN

Die Erfindung betrifft eine hydraulische Förderanlage mit Strömungswechselwerken zum Umstellen auf unterschiedliche Drücke und Strömungen, die in drei voneinander abgetrennten, mit flüssigen Medien aufgefüllten, unter Druck stehenden Räumen erzeugt werden. In den Räumen ist entweder eine Flüssigkeit oder ein Gemisch bestehend aus Flüssigkeit und Feststoff unter sich änderndem Druck und Strömungszustand zwecks Förderns des aus Flüssigkeit und Feststoff bestehenden Gemisches durch eine Rohrleitung vorhanden.

Zahlreiche Ausführungsformen von mit voneinander abtrennbaren Räumen, Kammern versehenen Dosieranlagen sind bekannt, deren Aufgabe es ist, lange Hochdruckleitungen, d.h. hydraulische Förderanlagen, über Pumpen mit Klarwasser bzw. mit dessen Druck und Strömung zu betreiben. Bei diesen hydraulischen Anlagen wird die zum Fördern des in der Rohrleitung strömenden Gemisches erforderliche kinetische Energie durch das Pumpen der Flüssigkeit erzeugt. Daher muß die Anlage einen konstruktiven Aufbau aufweisen, durch den die Bedingungen der Vermittlung des Druckes und der Strömung gewährleistet sind.

In Abhängigkeit von dem konstruktiven Aufbau der bekannten Kammern sind Dosierer bekannt, die aus einem oder mehreren, kleineren oder größeren (50 - 200 m³) zylinderförmigen, unter Druck setzbaren Behältern mit ungeteiltem Innenraum bestehen, die mit zwei oder drei 50-400 m langen verschließbaren Rohrleitungen - gleicherweise mit ungeteiltem Rauminhalt -versehen sind und als "Rohrkammer-Dosierer" bezeichnet werden.

Die Ergebnisse er vergangenen Jahrzehnte haben gezeigt, daß in der Mehrzahl hydraulische Förderanlagen mit Rohrkammern verwendet werden.

Die Zielsetzung der Erfindung ist grundsätzlich die Weiterentwicklung dieser Anlagen.

Zwecks Darstellung des technischen Niveaus der Erfindung werden bloß die Entwicklung der Rohrkammer-Dosierer und deren Zusammenhänge mit der Erfindung beschrieben.

Der Grundgedanke der Rohrkammer-Dosierer wurde 1952 von E.H.Reich und S.A.Jones in der US-A-2 485 208 und der DE-B-928 153 abgefaßt. Diese Anlage verfügt über einen das Gemisch sammelnden Behälter, eine anschließende Trübefüllpumpe, ein Speicherbecken für die Flüssigkeit, eine sich anschließende Pumpe für Klarflüssigkeit und über wenigstens zwei Rohrkammern. Die Kammern sind mit herkömmlichen Verschlußorgan-Schiebern und Drehschiebern voneinander und von der mit dem Gemischsammelbehälter verbundenen Trübefüllpumpe, von dem Flüssigkeitsspeicherbecken und von der an das Speicherbecken angeschlossenen Klarflüssigkeitspumpe bzw. von der das Gemisch fördernden Rohrleitung getrennt. Durch Umstellen auf die in einer Zweikammeranlage erzeugten Drücke und Strömungen kann die Kontinuität der Hochdruckströmung der Klarflüssigkeit gewährleistet werden, während in einer Dreikammeranlage auch die Kontinuität der Strömung des Gemisches unter Niederdruck sichergestellt werden kann. Bei dieser Ausführungsform wird die Funktion der aus Rohrsträngen aufgebauten Kammern - die Vermittlung der Drücke und Strömungen - durch die entsprechende Betätigung der in die Anschlußleitungen eingebauten Verschlußorgane in der entsprechenden Reihenfolge - nämlich Öffnen und Schließen - realisiert.

Die in der HU--A- 160 526 beschriebene Ausführungsform stellt die Weiterentwicklung der Reichl-Jonesschen Anlage mit Rohrkammern und Schiebern dar. Im Sinne dieser Ausführungsform sind die Räume der Kammern über die Kammern trennende, die Schieber umgehende Leitungen kleineren Durchmessers und über in diesen eingebaute kleindimensionierte Schieber mit der Klarflüssigkeitspumpe und der Abflußleitung verbunden. Im Verlauf des Betriebes der erwähnten Anlage werden vor der Betätigung der Schieber - die zum Umstellen auf die Strömungen erforderlich sind - die in den Kammerräumen herrschenden Druckunterschiede über die erwähnten kleiner dimensionierten Schieber ausgeglichen, wonach die die Kammern trennenden Schieber zwecks Umstellens der Strömung des in den Kammern vorhandenen Gemisches betätigt werden. Diese Ausführungsform gleicht diejenigen aus dem Druckunterschied resultierenden nachteiligen Krafteinwirkungen aus, die sich aus der Betätigung der Anlage ergeben.

Die US--A- 4 371 294 schlägt vor, in der Nähe der Verschlußorgane spezielle Druckeinsteller zwecks Ausgleichens der hohen Druckunterschiede anzuordnen. Der Druckeinsteller enthält einen einfachwirkenden hydraulischen Zylinder, der von einem Kolben in zwei Zylinderräume unterteilt wird. Der eine Zylinderraum ist mit der Rohrkammer verbunden, während der andere Zylinderraum mit Hydrauliköl aufgefüllt ist, wodurch der Druck - nämlich der in dem Kammerraum herrschende Druck - mit Hilfe einer Ölpumpe, eines Ventils sowie eines weiteren hydraulischen Zylinders und eines Druckfühlers auf den gewünschten Wert eingestellt werden kann. Diese Ausführungsform ist ziemlich kompliziert und kostenaufwendig, so daß sie bloß bei speziellen Anforderungen eingesetzt wird.

In der GB--A- 2 061 393 ist eine hydraulische Förderanlage beschrieben, deren Kammern in einem Rotor ausgestaltet sind, der in einem festgelegten Gehäuse drehbar angeordnet ist. Im Verlauf der Drehbewegung des Rotors wird je eine der drei Kammern über drei ausgestaltete Öffnungen an einen Niederdruck-Füllkreis angeschlossen. Die Kammer wird aufgefüllt, der Rotor dreht sich weiter, wodurch diese Kammer an einen Hochdruckkreis angeschlossen wird, wo die Kammer mit einer Hochdruckflüssigkeit - deren Temperatur über dem Siedepunkt liegt - entleert wird. Die in der Kammer zurückbleibende Flüssigkeit hoher Temperatur wird in einer weiteren Winkelstellung des Rotors in einem Hochdruck-Kühlkreis abgekühlt, wonach - nach der Weiterdrehung des Rotors - die Kammer wieder an den Niederdruck-Füllkreis angeschlossen wird.

Bei dieser Ausführungsform wird daher durch die Kühlung eine expolosionsartige Dampfbildung verhindert, wobei aber der Kammerdruckunterschied vorher, vor dem Anschließen der Kammer an die Kreise mit unterschiedlichen Drücken, nicht ausgeglichen wird.

Gemäß der HU-A-192 450 kann eine Dosiereinrichtung ausgebildet werden, bei welcher das Umstellen auf Drücke und Strömungen, die in voneinander abtrennbaren Kammern entstehen, dadurch erreicht werden kann, daß an beiden Enden jeder Kammer je ein sogenannter Kammerverschluß eingebaut ist. Die Kammerverschlüsse verbinden den Kammerraum mit je einer Anschlußleitung. An dem einen Ende des Kammerverschlusses ist ein offener zylindrischer Verschluß vorgesehen, an dessen Mantel zwei Öffnungen ausgestaltet sind. In dem Gehäuse ist ein koaxial um die Längsachse drehbarer zylindrischer, im Inneren hohler Rotor angeordnet, dessen Innenraum dem offenen Ende des Gehäuses zugewandt ist, wobei an dem Mantel des Rotors eine mit dem Innenraum kommunizierende Öffnung ausgestaltet ist, die bei der Drehung des Rotors die Öffnungen des Gehäuses überdeckt. Der Rotor ist mit einem Betätigungsorgan mit einer aus dem Gehäuse abgedichtet herausgeleiteten Antriebswelle versehen.

Aus der HU-A-192 675 ist zu entnehmen, daß die Betätigung des Dosierers durch ein Strömungwechselwerk realisiert wird, an dessen einem Ende ein offenes zylindrisches Gehäuse vorhanden ist. Am Mantel des Gehäuses sind drei Öffnungen in gleicher Verteilung entlang des Umfangs ausgestaltet. Innerhalb des Gehäuses ist ein mit Hilfe der aus dem Gehäuse herausgeführten Antriebswelle koaxial um die Längsachse drehbares zylindrisches hohles Innenteil ausgestaltet, dessen Innenraum in Richtung zu dem offenen Ende des Gehäuses offen ist. Auf dem Mantel des drehbaren Innenteils ist eine mit dem Innenraum kommunizierende Öffnung vorgesehen, die durch die Drehung des Innenteils mit jedwelcher der auf dem Mantel des Gehäuses vorhandenen Öffnungen in Überdeckung gebracht werden kann. Die auf dem Mantel des drehbaren zylindrischen Innenteils vorhandene Öffnung ist so dimensioniert, daß sie den Innenraum des Innenteils mit je einer auf dem Mantel des Gehäuses vorhandenen Öffnung oder - in einer Zwischenstellung zwischen zwei Öffnungen - mit diesen zwei Öffnungen verbindet. Infolge der Anwendung des erwähnten Strömungswechselwerkes brauchen weder eine Konstruktion noch ein separater Arbeitsvorgang zum Ausgleichen der die Anlage beaufschlagenden Drücke eingesetzt zu werden, da der Druckausgleich infolge der Drehung des Innenteils des Wechselwerkes mit adäquat gewählter Winkelgeschwindigkeit durchgeführt wird. Die veränderliche Drehbewegung wird als vorteilhaft betrachtet, da auf diese Weise zum Ausgleichen der Druckunterschiede unterschiedlicher Größen unterschiedliche Zeitschnitte zur Verfügung stehen, d.h. anläßlich der kritischen Zeitpunkte der Druckausgleichsvorgänge die Drehbewegung langsamer werden kann, und zwar je langsamer, je größer der Druckunterschied ist, wobei in den sonstigen Intervallen die Winkelgeschwindigkeit hoch ist.

Die Anwendung desjenigen Strömungswechselwerkes, an dessen einem Ende ein offenes zylindrisches Gehäuse vorgesehen ist, in dem ein koaxial um die Längsachse mit Hilfe der aus dem Gehäuse herausgeleiteten Antriebswelle drehbares hohles Innenteil vorhanden ist, wirft aufgrund der bisherigen Erfahrungen zahlreiche, unbekannte technische Probleme auf.

Bei dem Dosierer mit Strömungswechselwerken besteht während des 2uführarbeitsgangs die Forderung, daß die zylindrischen Innenteile der beiden Wechselwerke sich zur gleichen Zeit um 120° drehen und daß nach Beendigung dieser Drehung die Drehbewegungen der anderen beiden Strömungswechselwerke ebenfalls zur gleichen Zeit und mit gleicher Geschwindigkeit stattfinden.

Die Strömungswechselwerke müssen derart hergestellt werden, daß sie den auftretenden Drükken standhalten und daß die zylindrischen Innenteile auch unter Druck drehbar sind. Sich aus ihrem Aufbau ergebend muß man mit dem Auftreten räumlicher, aus dem Betriebsdruck resultierender Krafteinwirkungen rechnen, nämlich mit den im zylindrischen Innenteil axial und radial auftretenden Krafteinwirkungen. Zur Aufnahme der Krafteinwirkungen ist eine belastbare Lagerung erforderlich, damit der innere zylindrische Teil drehbar ist. Infolge der hohen Drücke (80-100 bar) und bei größeren Rohrdurchmessern sind die auf die Lager einwirkenden Kräfte recht groß. Aus diesem Grunde kann die Drehbarkeit des zylindrischen Innenteils in gewissen Fällen nicht gelöst werden.

Die Erfahrungen haben gezeigt, daß derartige drehbare Innenteile zum Umstellen der Strömungswechselwerke aus den erwähnten Gründen nur bei Rohrleitungen mit kleinerem Durchmesser - 150 - 200 mm - und bei Mitteldruck eingebaut bzw. in Betrieb gehalten werden können.

Bei sich drehenden Flächen wird zur Verschleißminderung diejenige Ausführungsform allgemein verwendet, bei der austauschbare Verschlußeinsätze vorhanden sind, damit von diesen die dem Verschleiß ausgesetzten Flächenteile geschützt werden. Gemäß einer anderen bekannten technischen Lösung werden die sich drehenden Flächen derjenigen Systeme, in welchen ein Feststoff enthaltendes Gemisch gefördert wird, mit dem sogenannten Leckwasser geschützt, dessen Druck den Betriebsdruck übertrifft. Durch die Verwendung der Verschlußeinsätze und des Leckwassers kann die Lebensdauer der wichtigeren Teile bedeutend verlängert werden.

In dem hydraulischen Fördersystem meldet sich neben der verschleißmindernden Wirkung des Leckwassers der zunehmende Wasserverbrauch als nachteilige Einwirkung insbesondere während einer längeren Betriebsperiode, wobei wegen des erhöhten und unvermeidbaren Verschleißes auch der Verbrauch an Leckwasser zunimmt.

Die Erfahrungen haben gezeigt, daß in hydraulischen Förderanlagen in den bogenförmigen Rohrleitungstrecken und in den Rohrprofilen ein größerer Verschleiß als Erfolg der dort entstehenden Turbulenz auftritt. Bei geraden Rohrabschnitten kann der Verschleiß ausschließlich auf dem Unterteil der horizontalen oder leicht geneigten Rohrleitung beobachtet werden, so daß wegen der Drehbarkeit der Rohrleitung die Lebensdauer der geraden Rohrleitungen doppelt bis dreifach so lang ist. Damit Rohrprofile nicht gedreht werden müssen, können sie entweder gegen Verschleiß geschützt oder öfter ausgetauscht werden. In der Praxis hat sich erwiesen, daß bei Dosierern, die mit Rohrkammern und Schiebern ausgerüstet sind, das Vorhandensein von etwa 12 Schiebern den Einbau von zahlreichen Bogenstücken erfordert und daß die Anzahl der Bogenstücke nicht einmal mit Hilfe eines Strömungswechselwerks bedeutend verringert werden konnte. Diese Bogenstücke hingegen stellen Reperaturquellen dar, womit sie im Vergleich mit den geraden Rohrleitungen auch den Kostenaufwand erhöhen.

Es ist bekannt, daß die Schieber der mit Rohrkammern ausgerüsteten Dosierer recht großdimensioniert sind, d.h. daß ihre Abmessungen den Durchmesser der Rohrleitung um das 1-bis 10-fache überschreiten. Ihr Nachteil besteht auch darin, daß sie nicht mobilisiert werden können. Die auf dem Prinzip des Strömungswechselwerks beruhenden Dosierer weisen bereits geringere Rauminhalte auf, aber mit den zwischen je zwei Wechselwerken eingebauten Getrieben und den angeschlossenen Rohrprofilen insbesondere bei größeren Abmessungen ist der Raumbedarf noch immer zu groß.

Zwecks Beseitigung der oben erwähnten Mängel wäre es wünschenswert, eine die Strömung umstellende Anlage zu entwickeln, die die Funktion zweier Wechselwerke so erfüllt, daß eine gleichförmige Drehung gewährleistet ist und die auftretenden "radialen" und "axialen" Krafteinwirkungen ausgeglichen werden. Als Erfolg könnte eine Vorrichtung mit beliebigem Druck und beliebigem Durchmesser gefertigt und in den Dosierer eingebaut werden.

Eine zu lösende Aufgabe stellt die Verringerung des Verschleißes der eng angepaßten Drehflächen und auch der Menge des Leckwassers dar, die auf einem minimalen Wert gehalten werden sollte, damit die Dichte des in der hydraulischen Förderanlage geförderten Gemisches während eines längeren Betriebs sich nicht ändern kann. Diese Aufgabe, daß eine unerwünschte Flüssigkeitsmenge die Eigenschaften des Gemisches nicht ändert, ist bei sehr dichten Gemischen von größter Bedeutung.

Es ist erwünscht, daß der Dosierer mit dem neuen Strömungswechselwerk aus geraden Rohrsträngen aufgebaut ist und daß die Anlage auch bei größeren Abmessungen in mobiler Bauart gestaltet ist.

Die Erfindung betrifft eine hydraulische Förderanlage mit Strömungswechselwerken zum Umstellen auf unterschiedliche Drücke und Strömungen, die in drei voneinander abtrennbaren, mit Flüssigkeit aufgefüllten und unter Druck stehenden Räumen erzeugt werden; in der Anlage ist eine mit ihrer Saugseite an einen Sammelbehälter für das Gemisch angeschlossene Trübefüllpumpe über eine Druckleitung, einen aus drei Speisekammern bestehenden Speiseraum und eine Abflußrohrleitung mit einem Flüssigkeitsspeicherbecken verbunden, während eine entleerende-fördernde Flüssigkeitspumpe, die mit ihrer Saugseite an das Flüssigkeitspeicherbecken angeschlossen ist, über eine Druckleitung und über den aus drei Speisekammern bestehenden Speiseraum mit der Gemischförderleitung verbunden ist.

Das Besondere an der erfindungsgemäßen Anlage ist insbesondere darin zu sehen, daß zur Verbindung der Auffülldruckleitung und der Abflußleitung über die Räume der Speisekammern ein einziges kombiniertes Strömungswechselwerk, sowie zur Verbindung der Druckleitung der Flüssigkeitspumpe und der Gemischförderleitung über die Kammern des Speiseraums ebenfalls ein einziges Strömungswechselwerk eingebaut ist. Die betätigenden wasserzuführenden Öffnungen der kombinierten Wechselwerke sind mit der Druckleitung der entleerendenfördernden Flüssigkeitspumpe verbunden. Die beiden kombinierten, zum Umstellen der Strömung dienenden Werke sind einander gegenüber angeordnet, wobei ihre Mittellinien übereinstimmen. Die polygonalen Gehäuse der kombinierten Strömungswechselwerke sind über je drei gerade Rohrstränge miteinander verbunden, die - ggf. über Krümmer - an je drei mit dem einen Profil A-A verbundenen Rohrflansche angeschlossen sind, während die drei an dem anderen Profil B-B - ggf. über Krümmer - angeschlossenen Rohrflansche gleicherweise über je drei gerade Rohrstränge miteinander verbunden sind. Die dem Gehäuse abgewandten Flansche der geraden Rohrstränge sind mit den Kammern verbunden. Gegebenenfalls ist der Dosierer - mit der Ausnahme der Kammern - in einem mobilen Kontainer angeordnet.

Die Mittellinien der zylindrischen Anschlußkanäle in dem Profil A-A des polygonalen Gehäuses sind um 60° gegen diejenigen der in dem Profil B-B desselben vorhandenen zylindrischen Anschlußkanäle versetzt. Beide Enden des zylindrischen Innenraumes des polygonalen Gehäuses des kombinierten Strömungswechselwerks sind offen. In dem zylindrischen Innenraum ist ein zylindrischer Körper drehbar, in dem zwei voneinander durch eine Wand getrennte zylindrische Hohlräume koaxial nebeneinander ausgebildet sind, die an ihren einander abgewandten Enden in Axialrichtung offen und an ihren einander zugewandten Enden radial abgebogen verlaufen und an der Außenfläche des zylindrischen Körpers jeweils in einer kreisförmigen Öffnung münden. Die Mittellinien der kreisförmigen Öffnungen der beiden zylindrischen Hohlräume an der zylinderförmigen Mantelfläche sind um einen Winkel von 60° gegeneinander versetzt.

In dem kombinierten Strömungswechselwerk ist in den zylindrischen Anschlußkanälen zwischen einem Verschleißeinsatz und einem sich nach außen anschließenden Einsatz ein Nachrückkolben eingebaut. Die Anschlußfläche des Verschleißeinsatzes an den Nachrückkolben ist wie dessen entsprechende Fläche als sphärische Fläche ausgebildet. An der sich an den zylindrischen Körper anschmiegenden Hohlzylinderfläche des Verschleißeinsatzes sowie an der Fläche des zylindrischen Körpers - wo diese die Fläche des Verschleißeinsatzes trifft - ist jeweils eine verschleißfeste Schicht ausgestaltet. An der Innenfläche der zylindrischen Anschlußkanäle in den Profilen des polygonalon Gehäuses bzw., an der Oberfläche des angeschlossenen Einsatzes sind Spalte ausgestaltet, in denen Dichtungsringe angeordnet sind. In der Wand des polygonalen Gehäuses sind eine zu dem Nachrückkolben führende, diesen mit Druck beaufschlagende Wasser einleitende Öffnung, und Leckwasser ableitende Öffnung vorgesehen.

In allen drei Speisekammern schließen sich dem einen Profil der kombinierten Strömungswechselwerke, den Flanschen der geraden Rohrstränge je ein Dichtemesser und ein Mengenmesser an. Beide sind mit einem zentralen Steuerwerk verbunden.

Der wichtigste Vorteil der erfindungsgemäßen Anlage zeigt sich im Folgenden: die Anlage erfüllt gleichzeitig die Aufgaben von zwei Strömungswechselwerken und zwar derweise, daß sie eine gleichmäßige Drehung gewährleistet. Gleichzeitig werden die in der Anlage entstehenden radialen und axialen Krafteinwirkungen ausgeglichen. Als Erfolg kann eine Vorrichtung mit beliebigem Durchmesser und beliebigem Druck gefertigt und in die Speiseanlage montiert werden.

Die erfindungsgemäße hydraulische Förderanlage mit kombinierten Strömungswechselwerken wird anhand eines Ausführungsbeispiels mit Hilfe der Zeichnung näher erläutert; es zeigen:

Figur 1 den schematischen Längsschnitt eines erfindungsgemäßen kombinierten Strömungswechselwerkes,

Figur 2 die Qerschnitte des Wechselwerkes nach Figur 1 entlang der Schnittlinien A-A und B-B,

Figur 3 einen Teilquerschnitt des Wechselwerkes aus Fig. 1 entlang der Achse eines der zylindrischen Anschlußkanäle, und

Figur 4 die schematische Darstellung der hydraulischen Förderanlage mit kombinierten Strömungswechselwerken nach den Fig. 1-3.

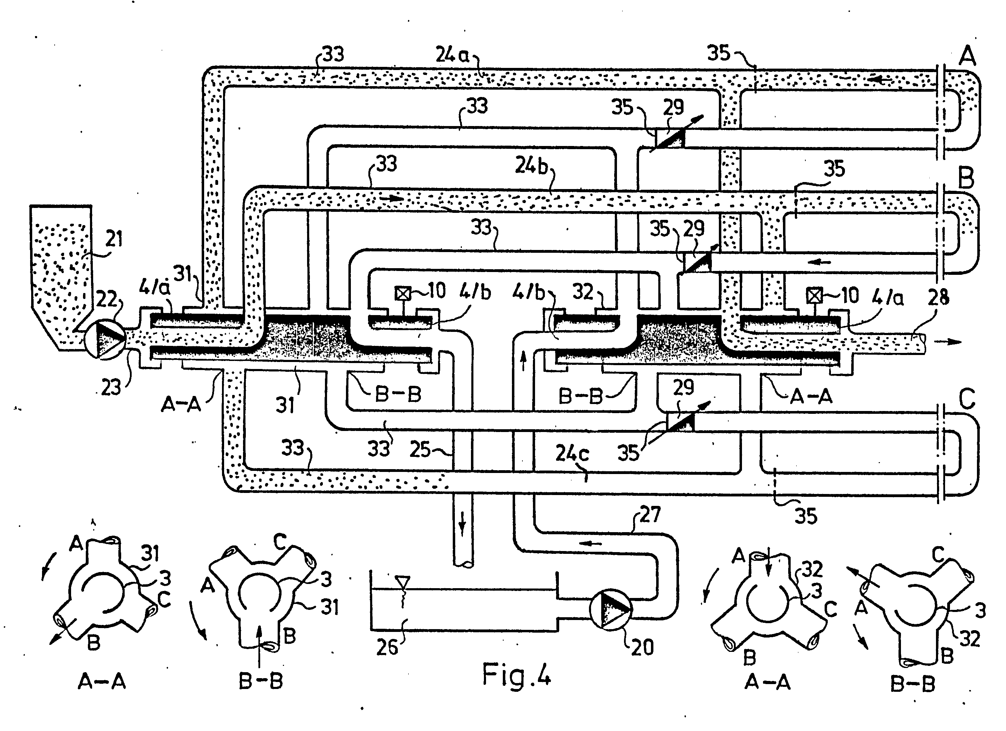

Aus Figur 4 ist schematisch auch die Funktionsweise der erfindungsgemäßen hydraulischen Förderanlage mit den kombinierten Strömungswechselwerken ersichtlich. In der hydraulischen Förderanlage ist die Trübefüllpumpe 22 mit ihrer an den Gemischsammelbehälter 21 angeschlossenen Saugseite über die Druckleitung 23, die Speisekammern 24a, 24b, 24c - von denen die Rohrkammern A, B, C gebildet werden - sowie über eine Abflußleitung 25 an das Flüssigkeitsspeicherbecken 26 angeschlossen, während die mit ihrer Saugseite an das Flüssigkeitsspeicherbecken 26 angeschlossene entleerende-fördernde Flüssigkeitspumpe 20 über die Druckleitung 27 und über die drei Speisekammern 24a, 24b, 24c mit der das Gemisch fördernden Rohrleitung 28 verbunden ist, wobei zur Verbindung der Auffülldruckleitung 23 und der Abflußleitung 25 über die Speisekammern 24a, 24b, 24c ein kombiniertes Strömungswechselwerk 31 vorgesehen ist. Zur Verbindung der Druckleitung 27 der Flüssigkeitspumpe 20 und der das Gemisch fördernden Förderleitung 28 über die Dosierkammern A, B, C der Speisekammern 24a, 24b, 24c ist gleicherweise ein kombiniertes Strömungswechselwerk 32 eingebaut.

Die erfindungsgemäße Anlage ersetzt zwei gesonderte Strömungswechselwerke und infolge der konstruktiven Gestaltung gleicht sie die in der Anlage entstehenden radialen und axialen Krafteinwirkungen aus.

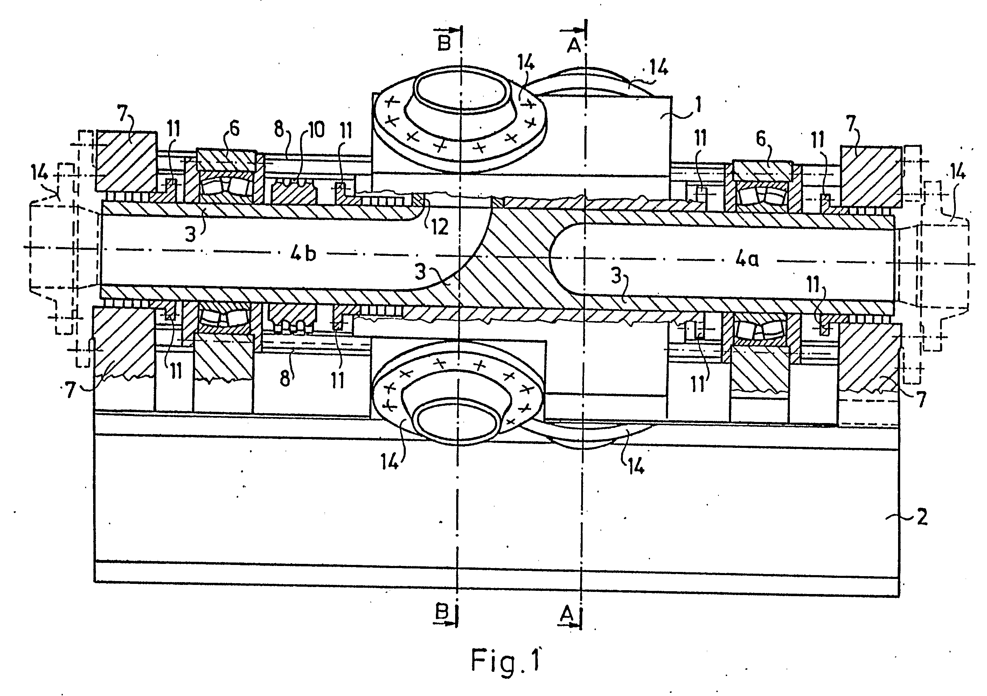

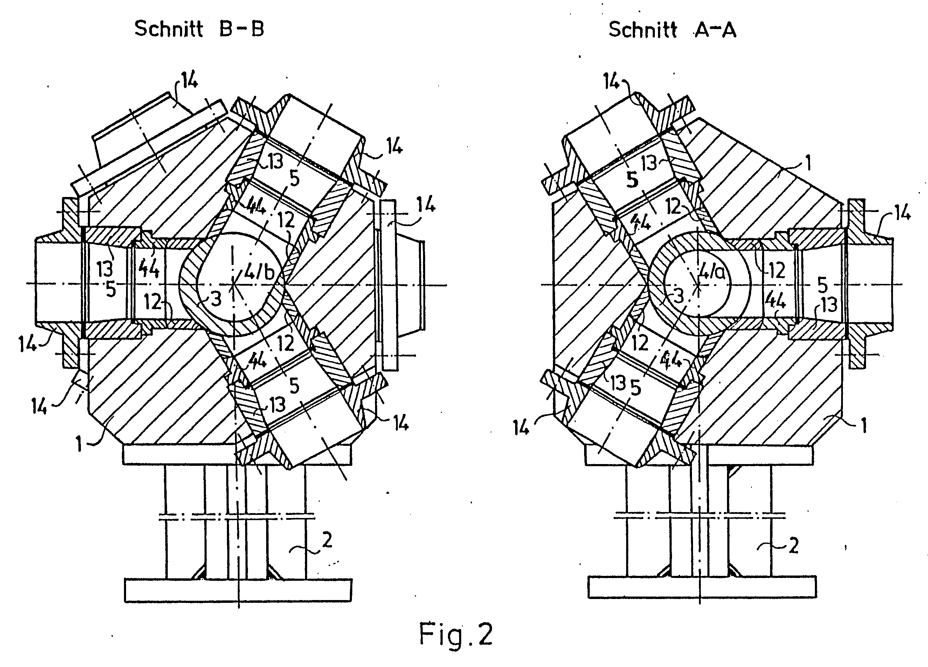

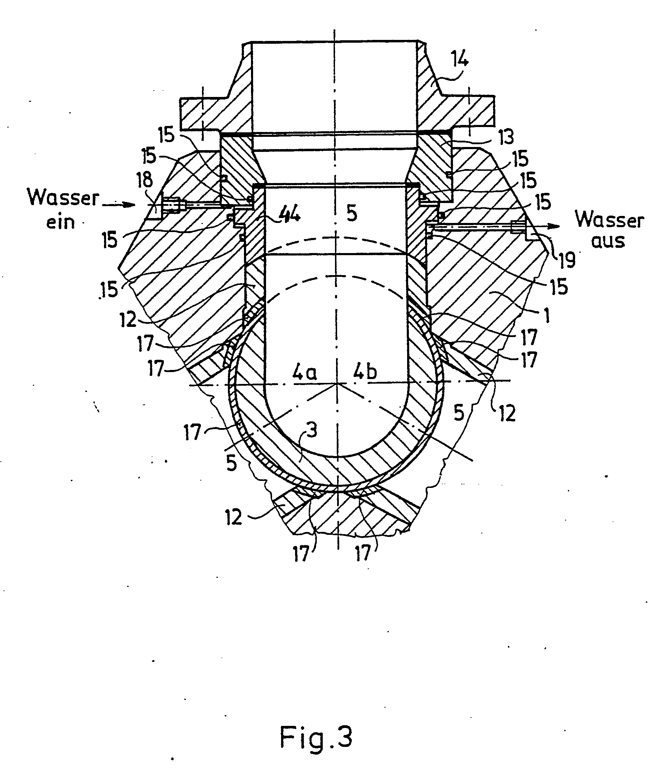

Jedes erfindungsgemäße kombinierte Strömungswechselwerk 31, 32 weist entsprechend den Fig. 1 bis 3 ein an beiden Enden offenes, außen polygonales Gehäuse 1 auf, dessen Innenseite zylindrisch ausgestaltet ist und das auf dem Sockel 2 steht. In dem Gehäuse 1 ist ein zylindrischer Körper 3 angeordnet, der koaxial um die Längsachse gedreht werden kann und länger ist als das Gehäuse 1, so daß er beidseitig aus diesem herausragt. Innerhalb des drehbaren zylindrischen Körpers 3 sind zwei koaxial nebeneinanderliegende zylindrische Hohlräume 4a, 4b ausgestaltet, welche in Richtung der Längsachse geradlinig sind, jedoch an ihren einander zugewandten Enden in Richtung zu der Mantelfläche des zylindrischen Körpers 3 hin radial abgebogen sind und an ihren einander zugewandten Enden über eine Zwischenwand voneinander getrennt sind. Die einander abgewandten Enden der Hohlräume 4a, 4b münden an der jeweiligen Stirnseite des zylindrischen Körpers 3. Die kreisförmigen Mündungsöffnungen der Hohlräume 4a, 4b auf der Zylindermantelfläche des zylindrischen Körpers 3 innerhalb der nebeneinander liegenden Profile A-A, B-B des Gehäuses 1 sind um einen Winkel von 60° gegeneinander versetzt. In den nebeneinander liegenden Profilen A-A, B-B des Gehäuses 1 sind jeweils drei Anschlußkanäle 5 mit zylindrischer Begrenzungsfläche ausgestaltet. Die in einer gemeinsamen, auch den Mittelpunkt der jeweiligen Mündungsöffnung der Hohlräume 4a, 4b enthaltenden Radialebene liegenden Mittellinien der Anschlußkanäle 5 in jedem der beiden Profile A-A, B-B sind ebenfalls um 60° gegeneinander versetzt. Auf diese Weise kommunizieren der eine und der andere Hohlraum 4a bzw. 4b im zylindrischen Körper 3 während der Drehbewegung mit jedem der jeweiligen Anschlußkanäle 5 im Profil A-A bzw. B-B des polygonalen Gehäuses 1.

Die je drei Anschlußkanäle 5 im Profil A-A, B-B des polygonalen Gehäuses 1 sind über Flansche 14 mit jeweils einer der drei Speisekammern A, B, C verbunden. Die axialen Enden der Hohlräume 4a, 4b des zylindrischen Körpers 3 des einen kombinierten Strömungswechselwerkes 31 sind über die Flansche 14 mit der Niederdruck-Trübefüllpumpe 22 bzw. der Abflußleitung 25, und des anderen kombinierten Strömungswechselwerkes 32 mit der Hochdruckpumpe 20 für die klare Flüssigkeit bzw. mit der Förderleitung 28 verbunden.

Die in axialer Richtung entstehenden Kräfte wirken entlang der Achsen der kombinierten Strömungswechselwerke, wo die Kräfte ausgeglichen werden. Die radialen Krafteinwirkungen werden ebenfalls ganz oder fast ganz ausgeglichen. Der zylindrische Körper 3 jedes der kombinierten Strömungswechselwerke ist an in der Nähe von dessen beiden Enden angeordneten Lagern 6 und an Stützringen 7 abgestützt, die über Druckstangen 8 miteinander verbunden sind. Die Konstruktion wird von dem Antrieb 10 angetrieben. Die Drehflächen werden mittels der Stopfbüchsen 11 abgedichtet.

Um den Verschleiß der eng aneinander angepaßten Drehflächen des kombinierten Strömungswechselwerks innerhalb des polygonalen Gehäuses 1 herabsetzen und die Menge des Leckwassers bei dem Minimum halten zukönnen, sind in den zylindrischen Anschlußkanälen 5 in den Profilen A-A und B-B des polygonalen Gehäuses je ein Verschleißeinsatz 12 und ein Anschlußeinsatz 13 ausgestaltet, zwischen welchen ein Nachrückkolben 44 eingebaut ist. Die in Kontakt stehenden Anschlußflächen des Verschleißeinsatzes und des Nachrückkolben sind als sphärische Flächen mit dem Radius R ausgestaltet; die sich an den zylindrischen Körper 3 anschmiegende hohlzylindrische Fläche des Verschleißeinsatzes 3 und die den Verschleißeinsatz 12 tangierende Fläche des zylindrischen Körpers 3 sind mit verschleißfesten Schichten 17 ausgestaltet. Die Spalte zwischen den Innenflächen der Anschlußkanäle 5 in den Profilen A-A und B-B des polygonalen Gehäuses 1 und den Anschlußflächen des Anschlußeinsatzes 13 sowie den Innenflächen der Anschlußkanäle 5 und der Umfangsflächen des Nachrückkolbens 44 sind mit Dichtungsringen 15 abgedichtet. In der Wand des polygonalen Gehäuses 1 ist eine Wasser zu den Nachrückkolben 44 leitende, und diese mit dem Wasserdruck beaufschlagende Öffnung 18 und eine Ableitung 19 vorhanden die in den Spalt zwischen den beiden Dichtungsringen 15 am Umfang des Nachrückkolbens 44 mündet. Die Öffnung 18 kommuniziert mit der Druckleitung 22 der Pumpe für die klare Flüssigkeit, wodurch der jeweilige Nachrückkolben 44 infolge des Wasserdruckes den verschiebbaren Verschleißeinsatz 12 allmählich auf die Umfangsfläche des zylindrischen Körpers 3 preßt, wodurch auf der eng angepaßten Drehfläche des zylindrischen Körpers 3 nur ein kleiner Spalt entsteht und nur eine geringe Wassermenge in den Innenraum des kombinierten Strömungswechselwerkes einfließt.

Die das die Nachrückkolben 44 beaufschlagende Druckwasser zuführenden betätigenden Öffnungen 18 der kombinierten Strömungswechselwerke 31, 32 sind mit der Druckleitung der entleerenden-fördernden Flüssigkeitspumpe verbunden. Die beiden kombinierten Strömungswechselwerke 31 und 32 sind einander gegenüber angeordnot, wobei die Mittellinien übereinstimmend sind. Die je drei Rohrflansche 14, die an die Profile A-A der polygonalen Gehäuse 1 der kombinierten Strömungswechselwerke 31, 32 angeschlossen sind, sind miteinander unmittelbar verbunden. Die je drei Rohrflansche, 14, die an den Profilen B-B der beiden kombinierten Strömungswechselwerke 31, 32 angeschlossen sind, sind über je drei gerade Rohrleitungen miteinander verbunden.

Mit der Ausnahme der Rohrkammern A, B, C ist die derweise ausgestaltete hydraulische Förderanlage in einem mobilen Kontainer angeordnet. Durch diese Anordnung kann erreicht werden, daß die sich simultan drehenden Vorrichtungen in dem kombinierten Strömungswechselwerk angeordnet sind, wobei das eine Strömungswechselwerk 31 an der Seite des Niederdruckes, das andere Strömungswechselwerk 32 an der Seite des Hochdrucks eingebaut ist. In den kombinierten Strömungswechselwerken 31, 32 gestalten sich die Druckverhältnisse so, daß die axialen und radialen Krafteinwirkungen einander gegenseitig neutralisieren; auf diese Weise wird es ermöglicht, daß eine Zuführanlage mit großdimensionierten Strömungswechselwerken und unter hohem Druck stehenden Räumen gebaut werden kann. Den Instrumenten, die Dichte und Mengen messen, wird die Aufgabe der kontinuierlichen Kontrolle der hydraulischen Förderanlage zugeteilt. Die kombinierten Strömungswechselwerke 31, 32 sind über die geraden Rohrstränge 33 aneinander axial abgestützt, die ihrerseits über an ihren Enden vorhandene Flansche 35 mit den Dosierkammern A, B, C verbunden sind. Die die Dichte und Mengen messenden Instrumente sind an ein zentrales Steuerwerk angeschlossen.

**Ansprüche**

1. Hydraulische Förderanlage mit Strömungswechselwerken zum Umstellen von Drücken und Strömungen, die in drei voneinander abtrennbaren, mit flüssigen Medien aufgefüllten, unter Druck stehenden Kammern (24a, 24b, 24c) erzeugt werden, wobei in der Anlage eine mit ihrer Saugseite an einen Gemischsammelbehälter (21) angeschlossene Trübefüllpumpe (22) über eine Auffülldruckleitung (23), einen aus den drei Speisekammern (24a, 24b, 24c) bestehenden Speiseraum (A, B, C) und eine Abflußleitung (25) mit einem Flüssigkeitsspeicherbecken (26) verbunden ist, desweiteren eine mit ihrer Saugseite an das Flüssigkeitsspeicherbecken (26) angeschlossene entleerende-fördernde Flüssigkeitspumpe (20) über eine Druckleitung (27) und den aus den drei Speisekammern (24a, 24b, 24c) bestehenden Speiseraum (A, B, C) mit einer Gemischförderleitung (28) verbunden ist, dadurch gekennzeichnet, daß zur Verbindung der Auffülldruckleitung (23) und der Abflußleitung (25) über die Speisekammern (24a, 24b, 24c) des Speiseraumes (A, B, C) ein erstes kombiniertes Strömungswechselwerk (31) vorgesehen ist, desweiteren zur Verbindung der Druckleitung (27) der Flüssigkeitspumpe (20) und der Gemischförderleitung (28) über die Speisekammern (24a, 24b, 24c) des Speiseraumes (A, B, C) ein zweites kombiniertes Strömungswechselwerk (32) eingebaut ist, daß die beiden kombinierten Strömungswechselwerke (31, 32) einander gegenüber angeordnet sind, wobei ihre Mittellinien übereinstimmen, daß die polygonalen Gehäuse (1) der kombinierten Strömungswechselwerke (31, 32) je zwei Anschlußprofile (A-A, B-B) aufweisen und über je drei Flansche (14) an dem einen Profil (A-A) und je drei gerade Rohrstränge (33) sowie über je drei Flansche (14) an dem anderen Profil (B-B) und je drei gerade Rohrstränge (33) miteinander verbunden sind, wobei die geraden Rohrstränge (33) andererseits über Flansche (35) mit den Speisekammern (24a, 24b, 24c) kommunizieren und gegebenenfalls die Speiseanlage - mit der Ausnahme der Rohrkammern (A, B, C) - in einem mobilen Kontainer angeordnet ist.

2. Hydraulische Anlage nach Anspruch 1, dadurch gekennzeichnet, daß beide Enden des polygonalen Gehäuses (1) jedes der kombinierten Strömungswechselwerke (31, 32) offen sind und in dem polygonalen Gehäuse (1) ein aus diesem beidseitig herausragender zylindrischer Körper (3) drehbar ist, in dem zwei koaxial nebeneinander angeordnete, voneinander separierte zylindrische Hohlräume (4a, 4b) ausgestaltet sind, deren einander abgewandten Enden axial offen sind und deren einander zugewandten Enden radial in Richtung zu der Mantelfläche des zylindrischen Körpers (3) abgebogen sind und dort innerhalb der Profile (A-A, B-B) des Gehäuses (1) mit kreisförmigen Öffnungen münden, die um einen Winkel von 60° gegeneinander versetzt sind, wobei in jedem der Profile (A-A, B-B) drei in jeweils einem der Flansche (14) mündende zylindrische Anschlußkanäle (5) ausgebildet sind, und die in dem einen Profil (A-A) des polygonalen Gehäuses (1) angeordneten zylindrischen Anschlußkanäle (5a) gegen die zylindrischen Anschlußkanäle (5b) in dem anderen Profil (B-B) ebenfalls um einen Winkel von 60° gegeneinander versetzt sind.

3. Hydraulische Anlage nach Anspruch 2, dadurch gekennzeichnet, daß in den zylindrischen Anschlußkanälen (5) zwischen einem verschiebbaren Verschleißeinsatz (12) und einem Anschlußeinsatz (13) ein Nachrückkolben (44) eingebaut ist und in der Wand des polygonalen Gehäuses (1) eine Wasser von der Druckleitung (27) der entleerenden-fördernden Flüssigkeitspumpe (20) zum Nachrückkolben (44) leitende Öffnung (18) vorgesehen ist, wobei die in Kontakt stehenden Anschlußflächen des Verschleißeinsatzes (12) und des Nachrückkolbens (44) als sphärische Flächen ausgestaltet sind und auf der sich an den zylindrischen Körper (3) anschmiegenden Fläche des Verschleißeinsatzes (12) sowie auf der den Verschleißeinsatz (12) tangierenden Fläche des zylindrischen Körpers (3) je eine verschleißfeste Schicht (17) ausgestaltet ist, wobei ferner in den Spalten zwischen den Innenflächen der zylindrischen Anschlußkanäle (5a, 5b) und der Umfangsfläche des Anschlußeinsatzes (13) sowie des Nachrückkolbens (44) Dichtungsringe (15) angeordnet sind, zwischen denen eine Ableitungsöffnung (19) abgezweigt ist.

4. Anlage nach einem der Ansprüche 1 bis 3, dadurch gekennzeichnet, daß an alle drei Speisekammern (A, B, C), die Profile (B-B) der kombinierten Strömungswechselwerke (31, 32), die Flansche (35) der geraden Rohrstränge (33) ein Dichtemesser und ein Mengenmesser (29) angeschlossen ist und diese Instrumente an ein zentrales Steuerwerk angeschlossen sind.

8

Fig.1

Schnitt B-B

Schnitt A-A

Fig.2

EP 0 372 216 A1

EP 0 372 216 A1

Fig.3

Fig.4

## EINSCHLÄGIGE DOKUMENTE

EP 89120122.0

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | <u>DE - B - 2 457 943</u><br>(RUHRKOHLE AG)<br>* Fig. 1 *<br>---- | 1 | B 65 G 53/30 |
| | | | **RECHERCHIERTE SACHGEBIETE (Int Cl⁵)** |
| | | | B 65 G |

Der vorliegende Recherchenbericht wurde für alle Patentansprüche erstellt.

| Recherchenort | Abschlußdatum der Recherche | Prüfer |
|---|---|---|
| WIEN | 13-03-1990 | PISSENBERGER |